**Europäisches Patentamt**

**European Patent Office**

**Office européen des brevets**

(11) Veröffentlichungsnummer: **0 271 103**
**A2**

## (12) EUROPÄISCHE PATENTANMELDUNG

(21) Anmeldenummer: **87118330.7**

(51) Int. Cl.4: **G01L 1/14**

(22) Anmeldetag: **10.12.87**

(30) Priorität: **10.12.86 DE 3642088**

(43) Veröffentlichungstag der Anmeldung:
**15.06.88 Patentblatt 88/24**

(84) Benannte Vertragsstaaten:
**AT BE CH DE ES FR GB GR IT LI LU NL SE**

(71) Anmelder: **Brunner, Wolfgang**
**Ringenberg 175**
**D-8999 Maierhöfen(DE)**

Anmelder: **von Zech, Ludwig**
**Argensee**
**D-7964 Kisslegg(DE)**

(72) Erfinder: **Brunner, Wolfgang**
**Ringenberg 175**
**D-8999 Maierhöfen(DE)**
Erfinder: **von Zech, Ludwig**
**Argensee**
**D-7964 Kisslegg(DE)**

(74) Vertreter: **Säger, Manfred, Dipl.-Ing.**
**Patentanwälte Dipl.-Ing. Otto Flügel Dipl.-Ing.**
**Manfred Säger Cosimastrasse 81**
**D-8000 München 81(DE)**

(54) **Anordnung zur Messung von Kraftverteilungen.**

(57) Die Anordnung dient zum Messen von mechanischen Kraftverteilungen auf der Basis matrixförmig angeordneter, sequentiel abfragbarer Meßfühler beliebiger Anzahl, welche durch die Krafteinwirkung proportionale elektrische Signale abgeben. Die Meßfühler sind alle mit einem Pol miteinander oder zumindest gruppenweise miteinander elektrisch leitend verbunden, wobei jeder Fühler mit einem zweiten Pol mit einem steuerbaren Schalter verbunden ist, der sich in unmittelbarer räumlicher Nähe der Meßfühler auf der Meßmatrix befindet. Die Schalter werden von Außerhalb der Meßmatrix gesteuert über Vorrichtungen, deren Eingänge elektrisch zeilen-oder zeilen-und spaltenförmig zusammengefaßt sind. Sämtliche Schalter sind mit einem Anschluß elektrisch leitend miteinander verbunden und ist jeweils ein Anschluß ein Schalter einer Gruppe oder Zeile miteinander elektrisch verbunden wobei eine dieser Zeilen von einem Schalter ausgewählt wird und die Stellung der Schalter einer ganzen Schaltergruppe oder Zeile vom Signal einer Steuerleitung abhängt.

Die Erfindung betrifft eine Anordnung zur Messung von mechanischen Kraftverteilungen gemäß dem Oberbegriff des Hauptanspruchs.

Eine solche Anordnung ist bekannt (DE-OS 25 29 475). Bei dieser bekannten Vorrichtung wird durch Zusammenfassen der Meßfühler Ein-und Ausgänge zu Zeilen und Spalten der Beschaltungs- und Ansteuerungsaufwand erheblich verringert.

Nachteilig bei dieser bekannten Anordnung ist jedoch, daß bei der Messung nicht nur jeweils ein Meßfühler, sonderen eine Kette parallel geschaltete Fühler das Meßsignal beeinflussen und damit ein Übersprechen zwischen den einzelnen Meßfühlern hervorruft. Um diesen Fehler gering zu halten, muß der Widerstand im Spannungsteiler bei der Abnahme des Meßsignals klein gegenüber dem Widerstand bzw. Blindwiderstand der Meßfühler sein. Hierdurch wird jedoch die Größe des Nutzsignals verringert. Ferner ergeben sich auf der Krafteinleitungsseite durch das zeilenweise Zusammenschalten der Meßfühler Anschlüsse und notwendige Abschirmungen, insbesondere bei kapazitiven Meßfühleranordnungen Schwierigkeiten bei der mechanischen Entkopplung und Robustheit der Anordnung. Mit dieser bekannten Anordnung sind also keine Meßfühler einsetzbar, die von sich aus nach Krafteinwirkung ein elektrisches Signal abgeben.

Die Anbringung von Abschirmungen und die sich dabei ergebende Probleme sind ebenfalls bekannt (DE-OS' en 30 25 362 und 34 11 528).

Der Erfindung liegt die Aufgabe zugrunde, eine gattungsgemäße Anordnung gemäß dem Oberbegriff des Hauptanspruchs zu schaffen, bei der die Anzahl der Zuleitungsadern zur Meßmatrix gegenüber der Anzahl der Meßfühler stark reduziert werden kann.

Diese Aufgabe wird bei einer gattungsgemäßen Anordnung gemäß dem Oberbegriff des Hauptanspruchs erfindungsgemäß durch dessen kennzeichnende Merkmale gelöst.

Die Schalter sind steuerbar und werden von außerhalb der Meßmatrix durch eine gegenüber der Anzahl der Meßfühler stark verminderte Anzahl von Steuerleitungen einzeln oder in Gruppen geschaltet. Die Meßfühler können über Schalter zusammen mit einem Widerstand in einen Spannungsteiler geschaltet werden, von dem jeweils das Meßsignal abgenommen und ausgewertet wird. Die Spannungsteiler können selbst beliebig dimensioniert werden, wodurch hohe Nutzsignale möglich sind. Werden Meßfühler verwendet, die nicht selbständig nach Krafteinwirkung ein elektrisches Signal abgeben, so muß eine Signalspannung aufgebracht werden. Durch die direkte räumliche Anordnung von Impedanzwandlern an den Meßfühlern, die zusammen mit den Schaltern aus je einem elektronischen Bauelement bestehen können, sind sehr höhe elektrische Störsicherheiten zu errreichen. Es können Meßfühler in einfacher Weise dadurch aufgebaut werden, daß die gemeinsamen Meßfühleranschlüsse der Krafteinleitungsseite aus einer im wesentlichen durchgehend elektrisch leitfähigen Fläche, und die mit den Schaltern verbundenen Anschlüsse aus einzelnen leitfähigen Flächen gebildet sind. Zwischen diesen Meßfühleranschlüssen kann sich bei kapazitiven Meßfühlern ein kompressibles Dielektrikum befinden. Wird eine Kraft aufgebracht, so erhöht sich proportional die Kapazität der einzelnen Kondensatoren. Die leitfähige Fläche der Krafteinleitungsseite kann durch entsprechende Beschaltung der Anordnung auf Massepotential gelegt werden, wodurch eine Abschirmung entfällt. Dies erleichtert eine elastische Ausgestaltung der Krafteinleitungsseite der Meßfühler, wodurch ein mechanisches Übersprechen zwischen den Fühlern verhindert wird. Wird das elastische Dielektrikum durch eine piezo-oder pyroelektrische Schicht oder durch ein widerstandsveränderndes Material ersetzt, so können hier durch in ähnlicher Weise einfache Meßfühleranordnungen hergestellt werden.

Durch diese Ausbildung ist eine Beeinflussung der Meßfühler untereinander durch mechanische und/oder elektrische Verkopplungen vergleichsweise gering. Ferner ist die elektrische und mechanische Störsicherheit der Meßfühler sowie der Störsignalabstand der Anordnung gegenüber jenen Anordnungen nach dem Stande der Technik erhöht. Schließlich ist die Anordnung für Meßfühler geeignet, die durch Aufschaltung eines elektrischen Signals aktiviert werden, oder die von sich aus nach Krafteinwirkung ein elektrisches Signal abgeben.

Weitere Möglichkeiten ergeben sich beispielsweise durch den Einsatz von Kraftmeßfühlern mit veränderbaren Induktivitäten oder magnetischen Feldern. In jedem Falle ist die erfindungsgemäße Anordnung in der Medizin zur Erfassung von Kraftverteilungen zwischen dem menschlichen Körper und Berührungsflächen einsetzbar.

Zweckmäßige Ausgestaltungen und Weiterbildungen der Erfindung sind in den Unteransprüchen gekennzeichnet.

Nachfolgend werden unter Bezugnahme auf die Zeichnung einige Ausführungsbeispiele anhand kapazitiver Meßfühler näher erläutert. In dieser zeigt:

Fig. 1 bis 3 elektrische Schaltungsanordnungen mit matrixförmiger Verteilung der insagesamt neun Meßfühler;

Fig. 4 und 5 den Aufbau kapazitiver Fühlerelemente mit Anordnung der Schalter und Steuerungseinrichtungen.

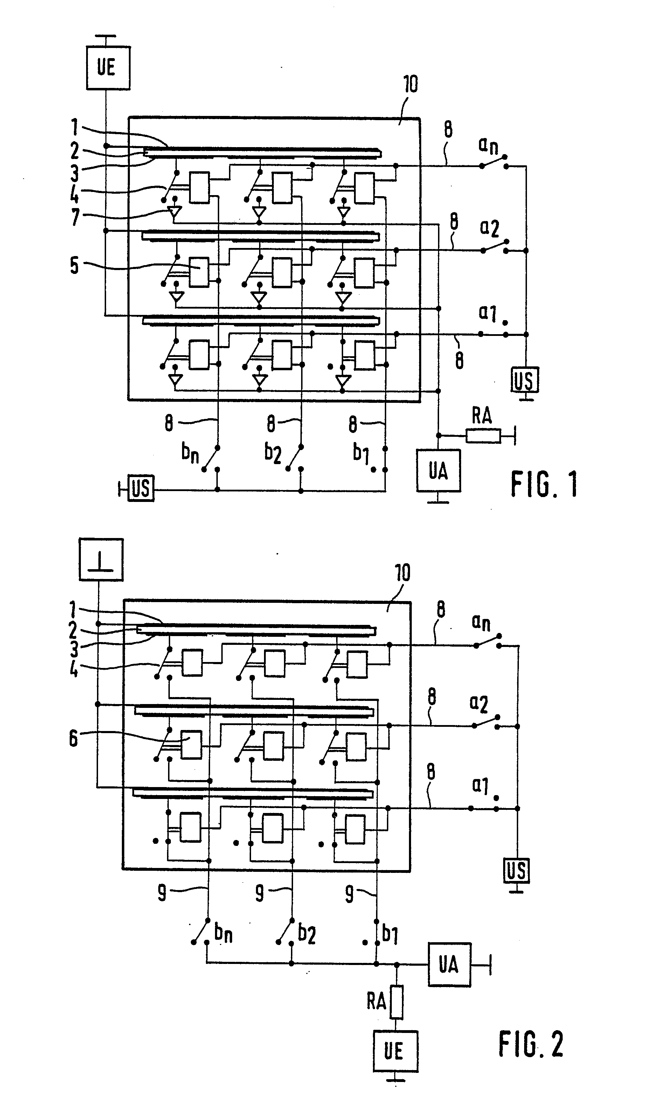

In der Schaltungsanordnung nach Fig. 1 werden die matrixförmig angeordneten Schalter (4) über Vorrichtungen (5) gesteuert. Jede Vorrichtung (5) beinhaltet eine logische UND-Funktion. Die zeilen-und spaltenförmig angeordneten Leitungen (8) steuern durch Aufschalten des Signals US über die Schalter al - an und b1 - bn die Schalter (4). Damit kann jeder Schalter (4) und somit jeder Kraftsensor ausgewählt und abgefragt werden.

Die Signalspannung UE, die aus einer sinusförmigen Spannung bestehen kann, wird auf die gemeinsamen Anschlüsse der Meßfühler (1) geleitet und über einen der Schalter (4) sowie einem Impedanzwandler (7) als Meßsignal UA am Arbeitswiderstand RA abgenommen.

Abweichend hierzu kann der Widerstand RA auch mit den gemeinsamen Anschlüssen der Meßfühler (1) oder mit jeder einzelnen Meßstelle der Matrix verbunden sein. Ebenso ist es möglich, unter Weglassung der Impedanzwandler (7), die Signalspannung (UE) in umgekehrter Richtung über RA auf die gemeinsamen Anschlüsse der Schalter (4) aufzubringen, und die gemeinsamen Meßfühleranschlüsse (1) auf Massepotential zu legen.

In Fig. 2 wird eine Anordnung gezeigt, bei der die Schalter (4) ganzer Zeilen von einem Steuersignal US über die Schalter al - an und den Steuerleitungen (8) mit Hilfe der Schaltvorrichtungen (6) gleichzeitig geschaltet werden. Die Ausgänge der Schalter (4) sind spaltenweise (9) verbunden. Die Signalspannung UE wird über den Widerstand RA und einen der Schalter (4) auf den anzusprechenden Meßfühler gegeben. Durch Betätigung der Schalter al - an un bl - bn kann über die Leitungen (8) und (9) der Wert jedes Meßfühlers abgefragt werden.

Die Signalspannung UE kann auch an die gemeinsamen Meßfühleranschlüsse (1) angelegt werden und am Spannungsteiler aus dem Widerstand RA und dem jeweils angeschalteten Meßfühler abgenommen werden. Ebenso können Impedanzwandler oder Widerstände RA direkt an den Meßfühlern angebracht sein.

Die Schaltungsanordnungen nach den Fig. 1 und Fig. 2 können grundsätzlich auch ohne die Widerstände RA und ohne Impedanzwandler (7) durch Messung der Stromstärke durch die Meßfühler betrieben werden. Ebenso sind Kombinationen aus den Schaltungsanordnungen nach Fi.g 1 und Fig. 2 möglich.

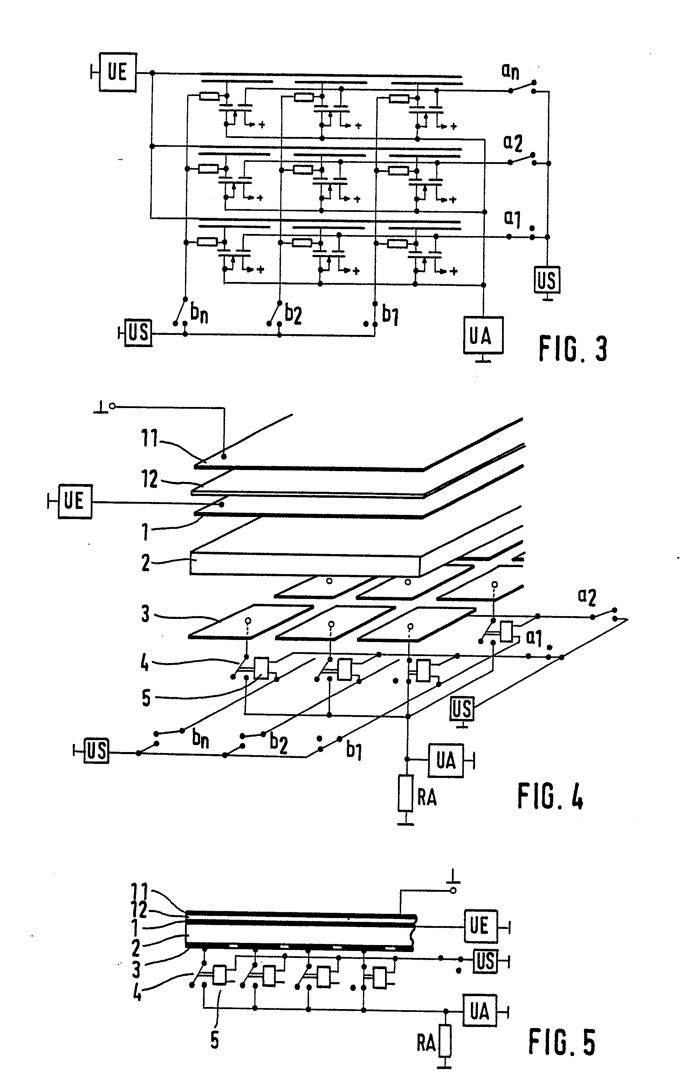

Fig. 3 zeigt als Ausführungsbeispiel eine Schaltungsanordnung, bei der die Schalter (4), die Schaltvorrichtung (5) mit UND-Charakteristik sowie die Impedanzwandler (7) mit einer Dual - MOS -Feldeeffekt - Tetrode und einem Widerstand RA gebildet sind.

Es ergeben sich verschiedene Ansteuerungsmöglichkeiten der Schaltungsanordnung. Die Signalspannung UE kann auf die gemeinsame Meßfühleranschlüsse aufgebracht und an den Source - Anschlüssen der Tedroden vom Spannungsteiler: Meßfühler - Widerstand RA, abgenommen werden. Es ergibt sich aber auch die Möglichkeit, die Signalspannung UE zusätzlich zum Steuersignal US über die Schalter bl - bn auf die spaltenförmigen, zu den Widerständen RA führenden Leitungen zu geben. Dabei bleibt die UND-Charakteristik der Schaltvorrichtungen sowie die Impedanzwandlung direkt an den Meßfühlern erhalten, jedoch können die gemeinsamen Meßfühleranschlüse bzw. die leitfähige Folie der Krafteinleitungsseite der Meßmatrix (10) auf Masse gelegt werden, was zu den bereits beschriebene Vorteilen bei der Konstruktion z.B. kapazitiver Kraftverteilungsmeßanordnungen führt.

Fig. 4 zeigt als Explosionszeichnung den Aufbau einer kapazitiven Meßfühlermatrix, mit gemeinsamen Meßfühleranschlüssen (1), wobei elastische, metallisierte oder beschichtete Kunststoffolien verwendet werden können. Anstatt einer durchgehend elektrisch leitfähigen Fläche, können auch einzelne, miteinander verbundenen Flächen, auch einstückig ausgebildet sein. Wird die Folie nicht mit Massepotential sondern mit der Signalspannung UE verbunden, so kann eine zusätzliche durch eine Isolierschicht (12) getrennte Abschirmfolie (11) notwedig sein. Folie (1) ist mit dem kompressiblen einzelnen Flächen (3) verbunden ist. Die einzelnen Kapazitäten ergeben sich zwischen den Flächen (3) und im wesentlichen aus einer gleichgroßen gegenüberliegenden Fläche der Folie (1).

Fig. 5 zeigt das Schnittbild der in Fig. 4 beschriebenen Anordnung.

**Ansprüche**

## ANORDNUNG ZUR MESSUNG VON KRAFTVERTEILUNGEN

1. Anordnung zur Messung von mechanischen Kraftverteilungen auf der Basis matrixförmig angeordneter, sequentiel abfragbarer Messfühler beliebiger Anzahl, welche durch die Krafteinwirkung proportionale elektrische Signale abgeben,
**dadurch gekennzeichnet,**
daß die Meßfühler mit einem Pol alle miteinander oder zumindest gruppenweise miteinander elektrisch leitend verbunden sind (1), und jeder Fühler mit einem zweiten Pol mit zumindest einem steuerbaren Schalter (4) verbunden ist, der sich direkt an oder in unmittelbarer räumlicher Nähe der Meßfühler auf der Meßmatrix (10) befindet, daß die Schalter (4) über Vorrichtungen (5,6), deren Eingänge elektrisch zeilen-oder zeilen und spaltenförmig (0) zusammengefaßt sind, von außerhalb der Meßmatrix (10) gesteuert werden, daß sämtliche Schalter (4) mit einem Anschluß miteinander elektrisch leitend verbunden sind, daß jeweils ein Anschluß der Schalter (4) einer Gruppe oder Zeile (9) miteinander elektrisch leitend verbunden ist, daß eine dieser Zeilen (9) von einem Schalter (bl-bn) ausgewählt wird und daß die Stellung der Schalter (4) einer ganzen Schaltergruppe oder Zeile vom Signal (US) einer Steuerleitung (8) abhängt.

2. Anordnung nach Anspruch 1,
**dadurch gekennzeichnet,**
daß die Vorrichtung (5) eine logische UND - Schaltung beinhaltet, deren Ausgangssignal den Schaltzustand der Schalter (4) bestimmt, und deren Eingangssignale durch zeilen-und spaltenförmig angeordnete Steuerleitungen (8) aufgebracht werden.

3. Anordnung nach den Ansprüchen 1 oder 2,
**dadurch gekennzeichnet,**
daß jeweils ein Anschluß der Schalter (4) einer Gruppe oder Zeile (9) miteinander elektrisch leitend verbunden ist, daß eine dieser Zeilen (9) von einem Schalter (bl-bn) ausgewählt wird und daß die Stellung der Schalter (4) einer ganzen Schaltergruppe oder Zeile vom Signal (US) einer Steuerleitung (8) abhängt.

4. Anordnung nach den Ansprüchen 1 bis 3,
**dadurch gekennzeichnet,**
daß jedem Schalter (4) ein Impedanzwandler (7) zugeordnet ist.

5. Anordnung nach einem der Ansprüche 1 bis 4,
**dadurch gekennzeichnet,**
daß die Kraftmeßfühler, wenn sie nicht von sich aus nach Krafteinwirkung ein elektrisches Signal abgeben, durch das Anlegen einer elektrischen Signalspannung (UE) aktiviert werden.

6. Anordnung nach einem der Ansprüche 1 bis 5,
**dadurch gekennzeichnet,**
daß die Meßfühler als druckempfindliche Kondensatoren mit einem kompressiblen Dielektrikum (2) gebildet sind.

7. Anordnung nach einem der Ansprüche 1 bis 6,
**dadurch gekennzeichnet,**
daß die Konensatoren auf der Krafteinleitungsseite im wesentlichen mit einer durchgehend elektrisch leitfähigen Schicht (1) gebildet sind.

8. Anordnung nach einem der Ansprüche 1 bis 7,
**dadurch gekennzeichnet,**
daß die der Krafteinleitungsseite gegenüberliegende Seite der Kondensatoren aus einzelnen leitfähigen Flächen (3) besteht.

9. Anordnung nach einem der Ansprüche 1 bis 8,
**dadurch gekennzeichnet,**

daß räumlich direkt unter diesen Flächen (3), die Schalter (4) mit zugehörigen Steuerschaltungen (5) angeordnet sind.

10. Anordnung nach einem der Ansprüche 1 bis 9,
**dadurch gekennzeichnet,**
daß die Schalter (4) mit zugehörigen Steuerschaltungen aus je einer Dual-MOS-Feldeffektтetrode und einem Widerstand gebildet sind.

11. Anordnung nach einem der Ansprüche 1 bis 5,
**dadurch gekennzeichnet,**
daß die Meßfühler aus pyroelektrischen Folien oder Piezoxiden bestehen.

12. Anordnung nach einem der Ansprüche 1 bis 5 oder 10,
**dadurch gekennzeichnet,**
daß die Meßfühler bei Krafteinwirkung die Größe eines Widerstandswertes, einer Induktivität oder eines magnetischen Feldes verändern.

FIG. 1

FIG. 2

FIG. 3

FIG. 4

FIG. 5